# EUROPÄISCHE PATENTSCHRIFT

(11) **EP 2 513 178 B1**
(45) Veröffentlichungstag und Bekanntmachung des Hinweises auf die Patenterteilung: **16.10.2013**
(21) Anmeldenummer: 10796335.7
(22) Anmeldetag: 13.12.2010
(51) Int. Cl.: C08G 18/08, C08G 18/62, C08G 18/67

(54) **NIEDRIGVISKOSE POLYURETHANACRYLATDISPERSIONEN**
Low viscous polyurethane acrylate dispersions
Dispersions de polyuréthane-acrylate peu visqueuses

(30) Priorität: 19.12.2009 EP 09015763; 29.04.2010 EP 10004513
(43) Veröffentlichungstag der Anmeldung: 24.10.2012
(73) Patentinhaber: Bayer Intellectual Property GmbH, 40789 Monheim (DE)
(72) Erfinder: SOMMER, Stefan, 51375 Leverkusen (DE); RISCHE, Thorsten, Columbus, Georgia 31907-9477 (US); LUEHMANN, Erhard, 29699 Bomlitz (DE)
(74) Vertreter: BIP Patents
(86) Internationale Anmeldenummer: PCT/EP2010/069453
(87) Internationale Veröffentlichungsnummer: WO 2011/073116

(56) Entgegenhaltungen:
- EP-A2- 2 113 523
- WO-A1-01/42329
- WO-A1-2005/118689

## Beschreibung

In den letzten Jahren wurden erhebliche Anstrengungen unternommen, strahlenhärtbare Polyurethanacrylate auf wasserbasierte Polyurethanacrylatdispersionen, im Folgenden als UV-PUDs bezeichnet, umzustellen. Vorteil der UV-PUDs gegenüber herkömmlichen, lösungsmittelhaltigen oder 100%igen Polyurethanacrylaten ist der geringe Anteil an flüchtigen organischen Bestandteilen (volatile organic compounds, VOC) bei gleichzeitig niedriger Viskosität des Bindemittels. Für wässrige UV-PUDs ist die Abhängigkeit der Viskosität vom Molekulargewicht des Polyurethanacrylats gebrochen. Unter allen strahlenhärtbaren Bindemitteltypen verschafft die niedrige Viskosität den wässrigen UV-PUDs einen unbestreitbaren Vorteil in Spritzapplikationen.

In der Regel sind UV-PUDs über potentiell ionische Gruppen, d. h. Gruppen, die durch Neutralisation in ionische Gruppen überführt werden können, ionische Gruppen oder über ionische Gruppen in Gegenwart von hydrophilen Polyethergruppen hydrophiliert. Bewährte Verfahren zur Herstellung von UV-PUDs sind das Präpolymermischverfahren und das Lösungsmittelverfahren.

Beim Präpolymermischverfahren wird das Polymer in der Schmelze oder in Gegenwart von hochsiedenden Lösungsmitteln, bevorzugt 3,5-Dimethylpyrazol, hergestellt und nach Einbau und gegebenenfalls Neutralisation der potentiell ionischen Gruppen durch Zusatz von Wasser dispergiert. Dieses Verfahren ist im Wesentlichen auf niedrige Molekulargewichte begrenzt, um die Viskosität in der Schmelze gering zu halten. Der Einsatz von hoch siedenden Lösungsmitteln ist aus gesetzlichen Gründen nicht gewünscht.

Beim Lösungsmittelverfahren, wird das Polymer in einem niedrig siedenden Lösungsmittel, oft Aceton (Aceton-Verfahren), hergestellt. Nach Einbau und gegebenenfalls Neutralisation der potentiell ionischen Gruppen im Polymer wird durch Zusatz von Wasser dispergiert, und sofern noch nicht erfolgt, durch Amine kettenverlängert. Im Anschluss kann das Lösungsmittel vom Polymer abdestilliert und dem Prozess wieder zugeführt werden. Vorteil dieses Verfahrens ist, dass auch Polymere mit hohem Molekulargewicht hergestellt werden können.

Das Verfahren zur Synthese von Polyurethandispersionen ist allgemein bekannt, siehe z. B. in Methoden der Organischen Chemie, Houben-Weyl, 4. Auflage, Band E20 / Teil 2, S. 1659 ff., Georg Thieme Verlag, Stuttgart, 1987.

Mit Abstand die am weitesten verbreiteten, synthetisch einbaubaren Hydrophilierungsagenzien für UV-PUDs sind Hydroxycarbonsäuren, wie z. B. Dimethylolpropionsäure und Hydroxypivalinsäure.

Für nicht-strahlenhärtbare Polyurethandispersionen sind zusätzlich zu Hydroxycarbonsäuren auch Aminocarbonsäuren und Aminosulfonsäuren als Hydrophilierungsreagenzien bekannt, wie z. B. das Natriumsalz des Michael-Adduktes von Ethylendiamin an Acrylsäure (PUD-Salz), 2-(2-Amino-ethylamino)-ethansulfonsäure und (Cyclohexylamino)propan-1-sulfonsäure (Methoden der Organischen Chemie, Houben-Weyl, 4. Auflage, Band E20 / Teil 2, S. 1662 ff., Georg Thieme Verlag, Stuttgart, 1987). Aufgrund der Aminfunktion werden sie ähnlich zu den in der Kettenverlängerung verwendeten Diaminen bevorzugt am Ende der Synthese eingesetzt. In der Literatur findet man für strahlenhärtbare Polyurethandispersionen nur sehr wenige Beispiele, in denen Aminocarbonsäuren bzw. Aminosulfonsäuren verwendet werden. Die Vergleichsbeispiele 7) und 8) in dieser Anmeldung zeigen deutlich die Probleme, die bei Verwendung von Aminocarbonsäuren bzw. Aminosulfonsäuren in strahlenhärtbaren Polyurethandispersionen auftreten können. Auf diese Weise hydrophilierte UV-PUDs sind oft entweder irreversibel hochviskos oder sedimentieren unmittelbar nach Dispergierung.

Unabhängig vom verwendeten Verfahren zeigt sich oft, dass über Hydroxycarbonsäuren hydrophilierte, d. h. potentiell ionisch hydrophilierte, UV-PUDs, direkt nach der Synthese eine erhöhte Viskosität aufweisen. Je höher die anfängliche Viskosität der Dispersion ist, umso größer ist auch der Abfall der Viskosität über die nächsten Tage und Wochen nach der Synthese. Es bestand daher ein allgemeines Bedürfnis, wasserbasierte, strahlenhärtbare Polyurethanacrylatdispersionen in konstanter und bevorzugt niedriger Viskosität bereitzustellen, da beispielsweise zur Herstellung von Lacken Verdicker eingesetzt werden, die auf eine definierte Viskosität der UV-PUDs eingestellt sind. Zusätzlich zur Bestimmung der Qualität der Dispersion werden unter anderem Lagertests bei erhöhter Temperatur durchgeführt, wobei die Viskosität der UV-PUDs nicht zu stark fallen darf.

In EP-A 753 531 werden Urethanacrylat-Dispersionen auf Basis von hydroxylgruppenhaltigen Polyester- und Polyepoxyacrylaten beschrieben. Unter den zahlreichen, angegebenen Verfahren ist das Aceton-Verfahren das bevorzugte. Die Umsetzung der dispergierend wirkenden Verbindungen, Komponente B), u. a. Hydroxycarbonsäuren, erfolgt von Beginn der Urethanisierung an.

In EP-A 942 022 werden Urethanacrylat-Dispersionen auf Basis von hydroxylgruppenhaltigen Polyester-, Polyether- oder Polyurethanacrylaten in Kombination mit Polyepoxyacrylaten beschrieben. Zur Herstellung der Dispersionen werden zahlreiche Verfahren genannt. Die Umsetzung der dispergierend wirkenden Verbindungen, Komponente B), u. a. Hydroxycarbonsäuren, erfolgt von Beginn der Urethanisierung an.

Wässrige, strahlungshärtbare Polyurethandispersionen auf der Basis von hydroxylgruppenhaltigen Polyester- oder Polyetheracrylaten finden sich in EP-A 872 502. Der Einbau der dispergierend wirkenden Verbindungen, Komponente g), u. a. Hydroxycarbonsäuren, erfolgt von Beginn der Urethanisierung an.

In WO-A 2006089935 werden Urethanacrylat-Dispersionen auf Basis NCO-haltiger Allophanatacrylate in Kombination mit hydroxylgruppenhaltigen Acrylatmonomeren und/oder mit hydroxylgruppenhaltigen Polyepoxy-, Polyester-, Polyether-, Polyurethan- oder Polycarbonatacrylaten beschrieben. In allen angeführten Beispielen erfolgt die Umsetzung der dispergierend wirkenden Verbindungen, Komponente d), u. a. Hydroxycarbonsäuren, von Beginn der Urethanisierung an.

In WO-A 2006138557 werden Urethanacrylat-Dispersionen auf Basis von hydroxylgruppenhaltigen Polyepoxy-, Polyester-, Polyether- oder Polyurethanacrylaten in Kombination mit Hydroxylalkylacrylaten beschrieben. Zur Herstellung der Dispersionen werden zahlreiche Verfahren genannt. Die Umsetzung der dispergierend wirkenden Verbindungen, Komponente c), u. a. Hydroxycarbonsäuren, erfolgt in den angegebenen Beispielen von Beginn der Urethanisierung an.

In EP-A 1845143 werden Urethahacrylat-Dispersionen auf Basis von dihydroxyfunctionellen Acrylaten in Kombination mit monohydroxyfunktionellen Acrylaten beschrieben. Die hydrophile Verbindung, Komponente (iii), u. a. Hydroxycarbonsäuren, werden dabei von Beginn der Urethanisierung an umgesetzt.

In EP-A 2113523 werden blockfeste strahlungshärtbare Beschichtungssysteme auf Basis hochmolekularer, wässriger Polyurethandispersionen beschrieben. Die Umsetzung der dispergierend wirkenden Komponente (A), u. a. Hydroxycarbonsäuren, erfolgt in den angegebenen Beispielen von Beginn der Urethanisierung an.

In WO-A 01/42329 werden wässrige, blockierte Isocyanatgruppen enthaltende Polyurethandispersionen beschrieben, in denen das Polyurethan aus aliphatischen Polyisocyanaten, Verbindungen mit isocyanatreaktiven funktionellen Gruppen sowie mit aktinischer Strahlung aktivierbaren Bindungen, niedermolekularen aliphatischen Verbindungen mit isocyanatreaktiven funktionellen Gruppen, Verbindungen mit isocyanatreaktiven funktionellen Gruppen und dispergierenden funktionellen Gruppen sowie Neutralisationsmittlen für die dispergierenden funktionellen Gruppen, aufgebaut ist. In den Beispielen wird ein Isocyanat-terminiertes Polyurethanacrylat (NGO-Präpolymer) beschrieben, das aus Hexamethylendiisocyant und 2-Hydroxyacrylat hergestellt wird und in einem zweiten Schritt mit Thioglykolsäure zu einem anderen Isocyant-terminierten Präpolymer umgesetzt wird. Es werden keine polymeren Verbindungen wie Polyester(meth)acrylate, Polyether(meth)acrylate, Polyetherester(meth)acrylate, ungesättigte Polyester mit Allyletherstruktureinheiten oder Polyepoxy(meth)acrylate offenbart.

In WO-A 2005/118689 werden stahlungshärtbare Verbundschichtplatten oder -folien beschrieben. Beispiel 5 dieser Anmeldung beschreibt die Herstellung einer wässrigen Dispersion, bei der ein Polyesterol, Acrylat-Monomere, Isocyanate und Urethanisierungskatalysator zur Reaktion gebracht werden. Dann erfolgt die Zugabe von Glykolsäure. Unter den Verbindungen mit mindestens einer copolymerisierbaren ungesättigten Gruppe werden lediglich monomere Verbindungen aufgezählt, nicht aber polymere Verbindungen wie Polyester(meth)acrylate, Polyether(meth)acrylate, Polyetherester(meth)acrylate, ungesättigte Polyester mit Allyletherstruktureinheiten oder Polyepoxy(meth)acrylate.

In EP-A 704 469 werden organischen Polyisocyanate mit Polyesterpolyolen und Verbindungen mit mindestens einer gegenüber Isocyanat reaktiven Gruppe und mindestens einer copolymerisierbaren, ungesättigten Gruppe in einem Reaktionsschritt umgesetzt. Unter den Verbindungen mit mindestens einer gegenüber Isocyanat reaktiven Gruppe und mindestens einer copolymerisierbaren ungesättigen Gruppe werden lediglich monomere Verbindungen aufgezählt, nicht aber polymere Verbindungen wie Polyester(meth)acrylate, Polyether(meth)acrylate, Polyetherester(meth)acrylate, ungesättigte Polyester mit Allyletherstruktureinheiten oder Polyepoxy(meth)acrylate. Die Umsetzung mit Verbindungen mit mindestens einer gegenüber Isocyanat reaktiven Gruppe und mindestens einer Carboxylgruppe oder Carboxylatgruppe erfolgt bevorzugt am Ende. Bevorzugt als Verbindungen mit mindestens einer gegenüber Isocyanat reaktiven Gruppe und mindestens einer Carboxylgruppe oder Carboxylatgruppe sind Aminocarbonsäuren beschrieben, besonders bevorzugt PUD-Salz (Michael-Addukt von Acrylsäure und Ethylendiamin), die wie die Diamine in der Kettenverlängerungsreaktion in der Regel am Ende der Reaktion zugegeben werden. Die Verwendung von Aminocarbonsäuren führt in der Regel zu hochviskosen UV-PUDs (siehe auch Vergleichsbeispiel 7 in dieser Anmeldung und Beispiel 1 in EP-A 704 469).

Aufgabe der vorliegenden Erfindung war es, ein Verfahren zur Synthese von UV-PUDs bereit zu stellen, bei dem die wässrige, strahlenhärtbare Polyurethandispersion als Bindemittel direkt nach der Synthese niedrigviskoser anfällt als bei bislang bekannten Verfahren.

Überraschenderweise wurde gefunden, dass über hydroxyfunktionalisierte Carbonsäuren hydrophilierte UV-PUDs eine niedrigere Anfangsviskosität aufweisen, wenn ein großer Teil der Urethanisierung, d. h. Umsetzung der NCO-funktionialisierten Verbindungen mit den OH-funktionialisierten Verbindungen, zuerst in Abwesenheit der säuretragenden Verbindungen stattfindet und der Einbau der säuretragenden Verbindungen über deren Hydroxylfunktion möglichst spät stattfindet. Solche Dispersionen weisen eine deutlich niedrigere Viskosität nach Herstellung auf als solche, bei denen die säurefunktionalisierten Komponenten schon zu Beginn der Urethanisierung zugesetzt wurden. Weitere Vorteile sind, dass die Menge der Säure reduziert werden kann, ohne dass der mittlere Teilchendurchmesser größer wird. Durch Abwesenheit der Säure verkürzt sich die Reaktionszeit bis zum Ende der Urethanisierung deutlich. Entsprechend können die Belegungszeiten für die Reaktoren und die Produktionskosten reduziert werden.

Die Erfindung betrifft ein Verfahren zur Herstellung strahlenhärtbarer, wässriger Dispersionen auf Basis von Polyurethanacrylaten (i) enthaltend als Aufbaukomponenten
A) eine oder mehrere polymere Verbindungen ausgewählt aus der Gruppe bestehend aus Polyester(meth)acrylaten, Polyether(meth)acrylaten, Polyetherester(meth)acrylaten, ungesättigte Polyester mit Allyletherstruktureinheiten und Polyepoxy(meth)acrylaten mit einer OH-Zahl im Bereich von 15 bis 300 mg KOH/g Substanz,
B) gegebenenfalls eine oder mehrere monomere Verbindungen unterschiedlich von A) mit einer Hydroxyfunktion und mindestens einer (Meth)acrylatgruppe,
C) eine oder mehrere Verbindungen unterschiedlich von A) oder B) mit mindestens einer gegenüber Isocyanat reaktiven Gruppe,
D) eine oder mehrere organische Polyisocyanate,
E) eine oder mehrere Verbindungen mit mindestens einer Hydroxyfunktion und zusätzlich mindestens einer Carbonsäure- oder Carboxylat-Funktion, die für die Polyurethandispersion dispergierend wirken,
F) von A) bis E) verschiedene Verbindungen mit mindestens einer gegenüber Isocyanat reaktiven Gruppe,
dadurch gekennzeichnet, dass die Komponenten A) bis D) in einem ersten Reaktionsschritt zu einem Polyurethanacrylat umgesetzt werden, das weder ionische noch potentiell ionische Gruppen enthält und nach Bestimmung des NCO-Gehaltes ein NCO-Wert erreicht wird, der um bis zu 1,5 Gew.-% NCO (absolut), bevorzugt um bis zu 1,0 Gew.-% NCO (absolut), besonders bevorzugt um bis zu 0,7 Gew.% NCO (absolut) vom theoretischen NCO-Gehalt abweichen kann, und
in einem zweiten Reaktionsschritt die Komponente E) mit noch freien NCO-Gruppen aus dem Reaktionsprodukt der Komponenten A) bis D) umgesetzt wird und nach erneuter Bestimmung des NCO-Gehaltes ein NCO-Wert erreicht wird, der um bis zu 1,5 Gew.-% NCO (absolut), besonders bevorzugt um bis zu 1,0 Gew.-% NCO (absolut) vom theoretischen NCO-Gehalt abweichen kann, und
in einem dritten Reaktionsschritt die Komponente F) mit noch freien NCO-Gruppen umgesetzt wird.

Zum erhaltenen Urethanacrylat aus den Komponenten A) bis E) wird gegebenenfalls ein Neutralisationsmittel zur Erzeugung der für die Dispergierung notwendigen ionischen Gruppen vor, während oder nach der Herstellung des Umsetzungsproduktes aus den Komponenten A) bis E) zugegeben, gefolgt von einem Dispergierschritt durch Zugabe von Wasser zum Urethanacrylat bzw. Überführen des Urethanacrylats in eine wässrige Vorlage, wobei in einem dritten Reaktionsschritt vor, während oder nach der Dispergierung eine Kettenverlängerung mittels Komponente F) erfolgt.

Gegenstand der Erfindung ist auch ein Verfahren gemäß vorstehender Beschreibung, bei dem ein oder mehrere Reaktivverdünner, enthaltend mindestens eine radikalisch polymerisierbare Gruppe, Komponente (ii), beigemischt werden.

"(Meth)acrylat" bezieht sich im Rahmen dieser Erfindung auf entsprechende Acrylat- oder (Meth)acrylatfunktionen oder auf eine Mischung beider.

Der theoretische NCO-Wert bezieht sich auf den NCO-Gehalt, der nach vollständiger Abreaktion aller OH-reaktiven Verbindungen mit allen NCO-haltigen Verbindungen erreicht wird, wobei ein Überschuss an NCO-haltigen Verbindungen eingesetzt wird. Zur Reaktionskontrolle wird der NCO-Gehalt in regelmäßigen Abständen experimentell über Titration, Infrarot- oder Nah-Infrarot-Spektroskopie bestimmt. Somit ist es in kontrollierter Weise möglich, nach jedem Reaktionsschritt einen NCO-Gehalt durch Zugabe von NCO-reaktiven Verbindungen zu erreichen, der in einem definierten Bereich um den theoretischen NCO-Wert liegt. Der experimentell bestimmte NCO-Gehalt kann vom theoretischen NCO-Gehalt um bis zu 1,5 Gew.-% NCO (absolut) abweichen, d.h. z. B. bei einem theoretischen NCO-Gehalt von 1,7 Gew.% kann der experimentell ermittelte NCO-Gehalt in dem Bereich von 3,2 Gew.-% bis 0,2 Gew.-% liegen. Der experimentell ermittelte NCO-Gehalt kann unterhalb der Theorie liegen, wenn weniger reaktive Gruppen, wie z. B. Urethangruppen, mit freiem NCO reagieren. Dies passiert in der Regel erst, wenn die reaktiveren OH-, NH- und/oder SH-Gruppen-tragenden Verbindungen abreagiert sind.

Zur Herstellung der Dispersionen nach dem erfindungsgemäßen Verfahren können sämtliche aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Diese Methoden sind dem Fachmann bekannt, siehe z. B. Methoden der Organischen Chemie, Houben-Weyl, 4. Auflage, Band E20 / Teil 2 auf Seite 1659, Georg Thieme Verlag, Stuttgart, 1987. Bevorzugt ist das Schmelz-Emulgier- und das Aceton-Verfahren. Besonders bevorzugt wird das Aceton-Verfahren.

Zur Herstellung des Reaktionsproduktes nach dem erfindungsgemäßen Verfahren werden in einem ersten Reaktionsschritt die Komponenten A) bis C) im Reaktor vorgelegt und gegebenenfalls mit Aceton verdünnt. Gegebenenfalls kann auch Komponente (ii) zu den Komponenten A) bis C) zugesetzt werden. Ebenfalls ist es möglich, Urethanisierungskatalysatoren dazu zu geben, bevor der Umsatz mit dem oder den Polyisocyanaten D) erfolgt. Anschließend dosiert man das oder die Polyisocyanate D) zu und erwärmt die Mischung, um ein Anspringen der Reaktion zu ermöglichten. In der Regel sind dazu Temperaturen von 30 bis 60 °C nötig. Auch die umgekehrte Variante ist möglich, wobei dann die Polyisocyanate D) vorgelegt und die isocyanatreaktiven Komponenten A) bis C) zugegeben werden. Die Zugabe der Komponenten A) bis C) kann auch nacheinander und in beliebiger Reihenfolge erfolgen. Zusammengenommen werden die Komponenten A) bis D) bis zum Erreichen des theoretischen NCO-Wertes, der um bis zu 1,5 Gew.% NCO (absolut), bevorzugt um bis zu 1,0 Gew.-% NCO (absolut), besonders bevorzugt um bis zu 0,7 Gew.% NCO (absolut) abweichen kann, in einem ersten Reaktionsschritt umgesetzt. Das so gewonnene Additionsprodukt enthält weder ionische noch potentiell ionische Gruppen. In einem zweiten Reaktionsschritt folgt die Zugabe der Komponente E), und die Reaktion wird fortgeführt bis zum erneuten Erreichen des theoretischen NCO- Wertes, der um bis zu 1,5 Gew,-% NCO(absolut), bevorzugt um bis zu 1,0 Gew.-% NCO (absolut). Im Anschluss wird gegebenenfalls Komponente F) mit noch freien NCO-Gruppen in einem dritten Reaktionsschritt umgesetzt.

Zur Beschleunigung der Addition an Isocyanat werden Isocyanatadditionsreaktionkatalysatoren, wie z. B Triethylamin, 1,4-Diazabicyclo-[2,2,2]-oktan, Zinndioktoat, Dibutylzinndilaurat oder Bismuthoctoat, zugesetzt, und die Mischung wird erwärmt, um ein Anspringen der Reaktion zu ermöglichen. In der Regel sind dazu Temperaturen von 30 bis 60 °C nötig.

Die molaren Verhältnisse von Isocyanatgruppen in D) zu gegenüber Isocyanaten reaktiven Gruppen in A) bis C) betragen von 1,2 : 1,0 bis 4,0 : 1,0, bevorzugt 1,5 : 1,0 bis 3,0 : 1,0.

Die molaren Verhältnisse von Isocyanatgruppen in D) zu gegenüber Isocyanaten reaktiven Gruppen in A), B), C) und E) betragen von 1,05 : 1,0 bis 2,5 : 1,0, bevorzugt 1,2 : 1,0 bis 1,5 : 1,0.

Nach der Herstellung des wässrigen, strahlenhärtbaren Polyurethanacrylats (i) nach dem erfindungsgemäßen Verfahren aus den Komponenten A) bis E) erfolgt, falls dies noch nicht in den Ausgangsmolekülen durchgeführt wurde, die Salzbildung der ionisch dispergierend wirkenden Zentren der Verbindungen E). Da Komponente E) nach dem erfindungsgemäßen Verfahren saure Gruppen enthält, werden bevorzugt Basen eingesetzt, wie beispielsweise Triethylamin, Ethyldiisopropylamin, Dimethylcyclohexylamin, Dimethylethanolamin, Ammoniak, N-Ethylmorpholin, LiOH, NaOH und / oder KOH.

Im Anschluss kann optional ein Reaktivverdünner (ii) oder eine Mischung von Reaktivverdünnern (ii) zugegeben werden. Das Zumischen von Komponente (ii) erfolgt bevorzugt bei 30 bis 45 °C. Sobald diese sich gelöst hat, folgt der letzte Reaktionsschritt, bei dem im wässrigen Medium eine Molmassenerhöhung durch die Komponente F) und die Ausbildung der für das erfindungsgemäße Beschichtungssystem benötigten Dispersionen stattfinden. Das Polyurethanacrylat (i), synthetisiert aus den Komponenten A) bis E), und gegebenenfalls der oder die Reaktivverdünner (ii) gegebenenfalls gelöst in Aceton werden unter starkem Rühren entweder in das Dispergierwasser, das das oder die Amine F) enthält, eingetragen oder man rührt umgekehrt die Dispergierwasser-Amin-Mischung zu der Polyurethanlösung (i). Außerdem bilden sich die Dispersionen aus, die im erfindungsgemäßen Beschichtungssystem enthalten sind. Die eingesetzte Menge an Amin F) hängt von den noch vorhandenen, nicht umgesetzten Isocyanatgruppen ab. Die Umsetzung der noch freien Iscocyanatgruppen mit dem Amin F) kann zu 35 % bis 150 % erfolgen. In dem Fall, dass ein Unterschuss an Amin F) eingesetzt wird, reagieren noch freie Isocyanatgruppen langsam mit Wasser ab. Wird ein Überschuss an Amin F) verwendet, so liegen keine freien Isocyanatgruppen mehr vor und es wird ein aminfunktionelles Polyurethanacrylat (i) erhalten. Bevorzugt werden 80 % bis 110 %, besonders bevorzugt 90 % bis 100 % der noch freien Isocyanatgruppen mit dem Amin F) umgesetzt.

In einer weiteren Variante ist es möglich, die Molmassenerhöhung durch das Amin F) bereits in acetonischer Lösung, d. h. vor der Dispergierung, und gegebenenfalls vor oder nach der Zugabe des oder der Reaktivverdünner (ii) durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig oder zumindest teilweise gleichzeitig durchzuführen.

Ein weiterer Vorteil des erfindungsgemäßen Verfahrens ist, dass falls Isocyanatadditionskatalysatoren verwendet werden, die Reaktionszeit zur Synthese des Polyurethans aus den Komponenten A) bis D) der UV-PUD erheblich verkürzt wird, wenn der Einbau der Komponente E) verzögert, also in einem zweiten Reaktionsschritt, stattfindet.

Aufbaukomponenten A), B) und gegebenenfalls Komponente (ii) werden dabei in solchen Mengen eingesetzt, dass der Gehalt an copolymerisierbaren Doppelbindungen zwischen 0,5 und 6,0 mol/kg, bevorzugt zwischen 1,0 und 5,5 mol/kg, besonders bevorzugt zwischen 1,5 und 5,0 mol/kg nicht wässriger Bestandteile der Dispersion beträgt.

Komponente (ii) wird zu 0 bis 65 Gew.-%, bevorzugt 0 bis 40 Gew.-%, besonders bevorzugt 0 bis 35 Ges.-% eingesetzt, wobei sich die Komponenten (i) und (ii) zu 100 Gew.-% addieren.

Komponente A) enthält eine oder mehrere Verbindungen ausgewählt aus der Gruppe bestehend aus Polyester(meth)acrylaten, Polyether(meth)acrylaten, Polyetherester(meth)acrylaten, ungesättigten Polyestern mit Allyletherstruktureinheiten und Polyepoxy(meth)acrylaten mit einer OH-Zahl im Bereich von 15 bis 300 mg KOH/g Substanz.

Von den Polyester(meth)acrylaten werden als Komponente A) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate als Komponente A) können insgesamt 7 Gruppen von Monomerbestandteilen zur Anwendung kommen:
Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Zahlenmittel der Molmasse Mn im Bereich von 200 bis 4000, bevorzugt 300 bis 2000, besonders bevorzugt 450 bis 1200 g/mol. Umsetzungsprodukte der zuvor genannten Diole mit s-Caprolacton oder anderen Lactonen können ebenfalls als Diole zum Einsatz gelangen.

Die zweite Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate A) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe bestehend aus Ethandiol, 1,2- und 1,3-Propandiol, 1,4-Butandiol, 1 ,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Zahlenmittel der Molmasse Mn im Bereich von 500 bis 1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology ofUV & EB Formulations For Coatings, Inks & Paints, Vol. 2, 1991, SITA Technology, London, beschrieben.

Ebenfalls geeignet als Komponente A) sind hydroxylgruppenhaltige Polyether(meth)acrylate, die aus der Umsetzung von Acrylsäure und / oder Methacrylsäure mit Polyethern hervorgehen, so z. B. Homo-, Co- oder Blockcopolymerisate von Ethylenoxid, Propylenoxid und / oder Tetrahydrofuran auf beliebigen hydroxy- und / oder aminfunktionellen Startermolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente A) sind die an sich bekannten hydroxylgruppenhaltigen Epoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit einer OH-Zahl im Bereich von 20 bis 300 mg KOH/g, bevorzugt von 40 bis 150 mg KOH/g, besonders bevorzugt von 50 bis 140 mg KOH/g. Solche Verbindungen werden ebenfalls auf Seite 37 bis 56 in P. K. T. Oldring (Ed.), Chemistry & Technology of UV & EB Formulations For Coatings, Inks & Paints, Vol. 2, 1991, SITA Technology, London beschrieben. Hydroxylguppenhaltige Epoxy(meth)acrylate basieren insbesondere auf Umsetzungsprodukten von Acrylsäure und / oder Methacrylsäure mit Epoxiden (Glycidylverbindungen) von monomeren, oligomeren oder polymeren Bisphenol-A, Bisphenol-F, Hexandiol und/oder Butandiol oder deren ethoxylierten und/oder propoxylierten Derivaten. Hydroxylgruppenhaltige Epoxy(meth)acrylate umfassen ebenfalls die Additionsprodukte von Acrylsäure und / oder Methacrylsäure mit Epoxiden ungesättigter Fette (Fettsäuretriglyceride), wie z. B. Photomer^{®} 3005 F (Fa. Cognis, Düsseldorf, DE).

Bevorzugte ungesättigte Gruppen enthaltende Verbindungen sind ausgewählt aus der Gruppe der Polyester(meth)acrylate, Polyether(meth)acrylate, Polyetherester(meth)acrylate und Polyepoxy-(meth)acrylate, welche neben den ungesättigten Gruppen noch Hydroxylgruppen aufweisen.

Die unter Komponente A) aufgezählten Verbindungen können für sich alleine oder auch als Mischungen verwendet werden.

Komponente B) enthält monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth)acrylat, Caprolacton-verlängerte Modifikationen von 2-Hydroxyethyl(meth)acrylat wie Pemcure^{®} 12A (Cognis, DE), 2-Hydroxypropyl(meth)acrylat, 4-Hydroxybutyl(meth)acrylat, 3-Hydroxy-2,2-dimethylpropyl(meth)acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch Alkohole, die sich aus der Umsetzung von doppelbindungshaltigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl-(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Besonders bevorzugt als monohydroxyfunktionelle, (Meth)acrylatgruppen-haltige Alkohole sind 2-Hydroxyethyl(meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Ganz besonders bevorzugt ist 2-Hydroxyethyl(meth)acrylat.

Die monohydroxyfunktionellen, (Meth)acrylatgruppen-haltigen Alkohole B) können für sich alleine oder auch als Mischungen verwendet werden.

Die Komponente C) enthält monomere Mono-, Di- und / oder Triole jeweils mit einem Molekulargewicht von 32 bis 240 g/mol, wie z. B. Methanol, Ethanol, 1-Propanol, 1-Butanol, 1-Pentanol, 1-Hexanol, 2-Propanol, 2-Butanol, 2-Ethylhexanol, Ethylenglykol, Diethylenglykol, Triethylenglykol, Tetraethylenglykol, Dipropylenglykol, Tripropylenglykol, 1,2-Propandiol, 1,3-Propandiol, 1 ,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), von Dimerfettsäure abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und / oder Rizinusöl. Bevorzugt sind Neopentylglykol, 1,4-Butandiol, 1,4-Cyclohexandimethanol, 1,6-Hexandiol und / oder Trimethylolpropan.

Des Weiteren enthält Komponente C) oligomere und / oder polymere, hydroxyfunktionelle Verbindungen. Diese oligomeren und / oder polymeren, hydroxyfunctionellen Verbindungen sind beispielsweise Polyester, Polycarbonate, Polyethercarbonatpolyole, C2-, C3-, und / oder C4-Polyether, Polyetherester, Polycarbonatpolyester mit einer Funktionalität von 1,0 bis 3,0, jeweils mit einem Gewichtsmittel der Molmasse Mw im Bereich von 300 bis 4000, bevorzugt 500 bis 2500 g/mol.

Hydroxyfunktionelle Polyesteralkohole sind solche auf Basis von Mono-, Di- und Tricarbonsäuren mit monomeren Di- und Triolen, wie sie bereits als Komponente B) aufgezählt wurden, sowie Polyesteralkohole auf Lacton-Basis. Bei den Carbonsäuren handelt es sich zum Beispiel um Phthalsäure, Isophthalsäure, Terephthalsäure, Trimellithsäure, Adipinsäure, Maleinsäure, Fumarsäure, Tetrahydrophthalsäure, Hexahydrophthalsäure, Malonsäure, Bernsteinsäure, Glutarsäure, Pimelinsäure, Korksäure, Sebacinsäure, Dodecandisäure, hydrierte Dimere der Fettsäuren sowie gesättigte und ungesättige Fettsäuren, wie z. B. Palmitinsäure, Stearinsäure, Myristoleinsäure, Palmitoleinsäure, Ölsäure, Linolsäure, Linolensäure, Rizinolsäure und deren technische Gemische. Von den Di- und Tricarbonsäuren können auch die analogen Anhydride verwendet werden.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestern, wie Diphenylcarbonat oder Dimethylcarbonat, zugängliche Polycarbonate. Hydroxyfunktionelle Polyethercarbonatpolyole sind solche, wie sie zum Aufbau von Polyurethandispersionen in DE-A 10 2008 000 478 beschrieben werden.

Die Komponente D) sind Polyisocyanate ausgewählt aus der Gruppe von aromatischen, araliphatischen, aliphatischen oder cycloaliphatischen Polyisocyanaten oder Mischungen solcher Polyisocyanate. Geeignete Polyisocyanate sind z. B. 1,3-Cyclohexandiisocyanat, 1-Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α'-Tetra-methyl-m- oder p-Xylylendiiocyanat, 1,6-Hexamethylendiisocyanat, 1-Isocyanato-3,3,5-trimethyl-5-isocyanatomethylcyclohexan (Isophorondiisocyanat oder IPDI), 4,4' -Diisocyanato-dicyclohexylmethan, 4-Isocyanatomethyl-1,8-octan-diisocyanat (Triisocyanatononan, TIN) (EP-A 928 799), Homologe bzw. Oligomere dieser aufgezδhlten Polyisocyanate mit Biuret-, Carbodiimid-, Isocyanurat-, Allophanat-, Iminooxadiazindion- und / oder Uretdiongruppen und deren Mischungen.

Ebenfalls geeignet als Komponente D) sind Verbindungen mit mindestens zwei freien Isocyanatgruppen, mindestens einer Allophanatgruppe und mindestens einer über die Allophanatgruppe gebundenen, radikalisch polymerisierbaren G=C-Doppelbindung, wie sie als Komponente a) in WO 2006089935 A1 beschrieben werden.

Bevorzugt als Komponente D) sind 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan, Homologe bzw. Oligomere von 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und/oder Uretdiongruppen und deren Mischungen. Ganz besonders bevorzugt ist 4,4'-Diisocyanato-dicyclohexylmethan.

Die Komponente E) umfasst Carbonsäure- oder Carboxylat-haltige Verbindungen mit mindestens einer Hydroxyfunktion, die für die UV-PUDs dispergierend wirken. Handelt es sich um Carbonsäure-haltige Verbindungen (potentiell anionische Gruppen), so werden diese im Verfahren durch Salzbildung in Carboxylat-haltige Verbindungen (ionische Gruppen) überführt. Die Komponente D) wird über die Hydroxyfunktion(en) in das Polyurethan eingebaut.

Bevorzugt als Komponente E) sind Mono- und Dihydroxycarbonsäuren, ausgewählt aus der Gruppe von Dimethylolpropionsäure, Dimethylolbuttersäure, Hydroxypivalinsäure, Äpfelsäure, Zitronensäure, Glykolsäure und Milchsäure. Besonders bevorzugt als Komponente E) sind Hydroxypivalinsäure und Dimethylolpropionsäure.

Die unter Komponente E) genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmopholin, LiOH, NaOH und / oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisation über 100%, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente E) aufgeführten Verbindungen können auch in Mischungen verwendet werden.

Zur Erhöhung der Molmasse der erfindungsgemäßen Polyurethanacrylate (i) werden Mono- und Diamine und / oder mono- oder difunktionelle Aminoalkohole als Komponente F) verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, Piperazin, 4,4'-Diphenylmethandiamin, aminofunktionelle Polyethylenoxide, aminofunktionelle Polypropylenoxide (bekannt unter dem Namen Jeffamin® D-Reihe [Huntsman Corp. Europe, Zavantem, Belgien]) und Hydrazin. Ganz besonders bevorzugt ist Ethylendiamin.

Bevorzugte Monoamide sind ausgewählt aus der Gruppe von Butylamin, Ethylamin und Amine der Jeffamin® M-Reihe (Huntsman Corp. Europe, Zavantem, Belgien), aminofunktionelle Polyethylenoxide, aminofunktionelle Polypropylenoxide und / oder Aminoalkohole.

Die Komponente (ii) sind Reaktiwerdünner, unter denen Verbindungen zu verstehen sind, die mindestens eine radikalisch polymerisierbare Gruppe, bevorzugt Acrlyat- und Methacrylatgruppen, und bevorzugt keine gegenüber Isocyanat- oder Hydroxygruppen reaktiven Gruppen enthalten.

Bevorzugte Verbindungen (ii) weisen 2 bis 6 (Meth)acrylatgruppen auf, besonders bevorzugte 4 bis 6.

Besonders bevorzugte Verbindungen (ii) weisen einen Siedepunkt von mehr als 200 °C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1 ,4-Cyclohexandiol, hydriertes Bisphenol A (2,2-Bis(4-hydroxycyclohexyl)propan), Glycerin, Trimethylolethan, Trimethylolpropan Trimethylolbutan, Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Die Komponente (ii) ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Gegenstand der Erfindung sind auch die nach dem erfindungsgemäßen Verfahren hergestellten strahlenhärtbaren, wässrige Dispersionen auf Basis von Polyurethanacrylaten (i).

Gegenstand der Erfindung ist auch die Verwendung der nach dem erfindungsgemäßen Verfahren hergestellten strahlenhärtbaren, wässrigen Dispersionen zur Herstellung von Beschichtungen insbesondere von Lacken und Klebstoffen.

Die erfindungsgemäßen Dispersionen ergeben nach Entfernen des Wassers mit üblichen Methoden, wie Wärme, Wärmestrahlung, bewegter ggf. getrockneter Luft und / oder Mikrowellen, klare Filme. Durch anschließende strahlenchemisch und / oder radikalisch induzierte Vernetzung härten die Filme zu besonders hochwertigen und chemikalienresistenten Lacküberzügen aus.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure^{®} 500 (eine Mischung von Benzophenon und (1-Hydroxycyclohexyl)phenylketon, Fa. Ciba, Lampertheim, DE), Irgacure^{®} 819 DW (Phenylbis-(2, 4, 6-trimethylbenzoyl)-phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die UV-Härtung bei 30 bis 70 °C durchgeführt, weil bei höherer Temperatur der Umsetzungsgrad an (Meth)acrylatgruppen tendenziell erhöht ist. Dies kann bessere Beständigkeitseigenschaften zur Folge haben. Allerdings ist bei der UV-Härtung eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Der oder die Strahler, die die radikalische Polymerisation auslösen, können dabei ortsfest sein und das beschichtete Substrat wird durch geeignete übliche Vorrichtungen am Strahler vorbeibewegt oder die Strahler sind durch übliche Vorrichtungen beweglich, so dass die beschichteten Substrate während der Härtung ortsfest sind. Es ist auch möglich die Bestrahlung z. B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wässrige Emulsionen nicht-wasserlöslicher Initiatoren. Diese Radikalbildner können in bekannter Weise mit Beschleunigern kombiniert werden.

Die erfindungsgemäßen UV-PUDs lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen UV-PUDs können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfindungsgemäßen Beschichtungssysteme auch in oder als Klebstoffe eingesetzt werden, z. B. in Kontaktklebstoffen, in thermoaktivierbaren Klebstoffen oder in Kaschierklebstoffen.

Die erfindungsgemäßen UV-PUDs können alleine aber auch in Bindemittelmischungen mit anderen Dispersionen eingesetzt werden. Dies können Dispersionen sein, die ebenfalls ungesättigte Gruppen enthalten, wie z. B. ungesättigte, polymerisierbare Gruppen enthaltende Dispersionen auf Polyester-, Polyurethan-, Polyepoxy(meth)acrylat-, Polyether-, Polyamid-, Polysiloxan-, Polycarbonat-, Epoxyacrylat-, Polymerisat-, Polyesteracrylat-, Polyurethan-Polyacrylat- und / oder Polyacrylatbasis.

Es können auch solche Dispersionen auf Basis von Polyestern, Polyurethanen, Polyethern, Polyamiden, Polyvinylestern, Polyvinylethern, Polysiloxanen, Polycarbonaten, Polymerisaten und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können den erfindungsgemäßen UV-PUDs, weiterhin so genannte Vernetzter zugesetzt werden. Es kommen bevorzugt nicht-blockierte und / oder blockierte Polyisocyanate, Polyaziridine, Polycarbodiimide sowie Melaminharze in Frage. Besonders bevorzugt sind nicht-blockierte und / oder blockierte, hydrophilierte Polyisocyanate für wässrige Beschichtungsmittel. Bevorzugt werden ≤ 20 Gew.-%, besonders bevorzugt ≤ 10 Gew.-% an festem Vernetzer auf den Festgehalt des Beschichtungsmittels zugesetzt.

Es können auch Dispersionen auf Basis von auf Polyestern, Polyurethanen, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten, Polyacrylaten, Polyurethan-Polyacrylat-, Polyesteracrylat-, Polyetheracrylat-, Alkyd-, Polycarbonat-, Polyepoxy-, Epoxy-(meth)acrylatbasis in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Dem Beschichtungsmittel, welche die erfindungsgemäßen UV-PUDs enthalten, können auch Aminovernetzerharze, auf Melamin- oder Harnstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen zugesetzt sein. Als weitere Vernetzer sind auch Carbodiimide oder Polyaziridine möglich.

Die erfindungsgemäßen Beschichtungsmittel können mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Die erfindungsgemäßen Beschichtungsmittel sind für die Beschichtungen von Folien geeignet, wobei zwischen physikalischer Trocknung und UV-Härtung eine Verformung der beschichteten Folie stattfindet.

Besonders geeignet sind die erfindungsmäßigen Beschichtungsmittel für Klarlackanwendungen auf Holz- und Kunststoffsubstraten, bei denen es nach physikalischer Trocknung auf Blockfestigkeit und nach Strahlenhärtung auf gute Resistenzen gegen Chemikalien ankommt.

Ebenfalls besonders geeignet sind die erfindungsmäßigen Beschichtungsmittel für Holz- und Kunststoffanwendungen mit einem Pigmentgehalt ≥ 10 Gew.-%, bezogen auf die gesamte Formulierung. Sollte es aufgrund von hohen Pigmentgehalten zu einer unvollständigen Reaktion der strahlungshärtbaren Gruppen im Beschichtungssystem während der Strahlungshärtung kommen, so werden blockfeste Beschichtungen erhalten.

Beschichtungsmittel enthaltend die erfindungsgemäßen strahlenhärtbaren, wässrigen Dispersionen auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen, sind ebenfalls Gegenstand der vorliegenden Erfindung.

Weiterhin sind Substrate beschichtet mit den erfindungsgemäßen Beschichtungsmitteln Gegenstand dieser Erfindung.

### Beispiele

### Methoden

Der NCO-Gehalt wurde jeweils gemäß DIN 53185 titrimetrisch verfolgt.

Der Feststoffgehalt wurde gravimetrisch nach Abdampfen aller nichtflüchtigen Bestandteile gemäß DIN 53216 bestimmt.

Der mittlere Teilchendurchmesser wurde durch Photonenkorrelationsspektroskopie ermittelt.

Die Auslaufzeit wurde gemäß DIN 53211 mit Hilfe des 4 mm DIN-Bechers bestimmt.

### 1) Herstellung einer UV-härtbaren, wässrigen Polyurethan-Dispersion (Vergleich)

339,9 Teile des Polyesteracrylats Laromer® PE 44 F (BASF AG, Ludwigshafen, DE), Komponente A), 10,8 Teile 1,4-Butandiol, Komponente C), 30,3 Teile Dimethylolpropionsäure, Komponente E), 199,7 Teile 4,4'-Diisocyanatodicyclohexylmethan, Komponente D), und 0,6 Teile Dibutylzinndilaurat wurden in 185 Teilen Aceton gelöst und bis zu einem NCO-Gehalt von 2,1 Gew.-% (Theorie 1,72 Gew.-%) bei 60 °C unter Rühren umgesetzt. Anschließend erfolgte die Neutralisation durch Zugabe und Unterrühren von 19,4 Teilen Triethylamin. Die klare Lösung wurde unter Rühren in 900 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine UV-härtbare, wässrige Polyurethan-Dispersion 1) mit einem Feststoffgehalt von 40 Gew.-%, einem mittleren Teilchendurchmesser von 90 nm, einem pH-Wert von 8,7 und einer Auslaufzeit von 39 sec erhalten. Die Säurezahl des Polyurethanacrylats betrug 17,5. Reaktionszeit bis zur Neutralisation: 15 h.

### 2) Herstellung einer erfindungsgemäßen, UV-härtbaren, wässrigen Polyurethan-Dispersion

339,9 Teile des Polyesteracrylats Laromer® PE 44 F (BASF AG, Ludwigshafen, DE), Komponente A), 10, 8 Teile 1,4-Butandiol, Komponente C), 199,7 Teile 4,4'-Diisocyanatodicyclohexylmethan, Komponente D), und 0,6 Teile Dibutylzinndilaurat wurden in 185 Teilen Aceton gelöst und bis zu einem NCO-Gehalt von 4,7 Gew.-% (Theorie 4,37 Gew.-%) bei 60 °C unter Rühren umgesetzt. Es folgte die Zugabe von 30,3 Teile Dimethylolpropionsäure, Komponente E), die weiter bei 60 °C umgesetzt wurde bis zu einem NCO-Wert von 2,1 Gew.-% (Theorie: 1,72 Gew.-%). Anschließend erfolgte die Neutralisation durch Zugabe und Unterrühren von 19,4 Teilen Triethylamin. Die klare Lösung wurde unter Rühren in 900 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 2) mit einem Feststoffgehalt von 40 Gew.-%, einem mittleren Teilchendurchmesser von 53 nm, einem pH-Wert von 8,5 und einer Auslaufzeit von 79 sec erhalten. Die Säurezahl des Polyurethanacrylats betrug 17,5. Reaktionszeit bis zur Neutralisation: 5 h.

### 3) Herstellung einer erfindungsgemäßen, UV-härtbaren, wässrigen Polyurethan-Dispersion

339,9 Teile des Polyesteracrylats Laromer® PE 44 F (BASF AG, Ludwigshafen, DE), Komponente A), 13,2 Teile 1,4-Butandiol, Komponente C), 199,7 Teile 4,4'-Diisocyanatodicyclohexylmethan, Komponente D), und 0,6 Teile Dibutylzinndilaurat wurden in 185 Teilen Aceton gelöst und bis zu einem NCO-Gehalt von 4,3 Gew.-% (Theorie 4,04 Gew.-%) bei 60 °C unter Rühren umgesetzt. Es folgte die Zugabe von 26,7 Teile Dimethylolpropionsäure, Komponente E), die weiter bei 60 °C umgesetzt wurde bis zu einem NCO-Wert von 2,1 Gew.-% (Theorie: 1,72 Gew.-%). Anschließend erfolgte die Neutralisation durch Zugabe und Unterrühren von 19,4 Teilen Triethylamin. Die klare Lösung wurde unter Rühren in 900 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 3) mit einem Feststoffgehalt von 40 Gew.-%, einem mittleren Teilchendurchmesser von 76 nm, einem pH-Wert von 8,8 und einer Auslaufzeit von 18 sec erhalten. Die Säurezahl des Polyurethanacrylats betrug 15,5. Reaktionszeit bis zur Neutralisation: 5,5 h.

### 4) Herstellung einer erfindungsgemäßen, UV-härtbaren, wässrigen Polyurethan-Dispersion

339,9 Teile des Polyesteracrylats Laromer® PE 44 F (BASF AG, Ludwigshafen, DE), Komponente A), 15,0 Teile 1,4-Butandiol, Komponente C), 199,7 Teile 4,4'-Diisocyanatodi-cyclohexylmethan, Komponente D), und 0,6 Teile Dibutylzinndilaurat wurden in 185 Teilen Aceton gelöst und bis zu einem NCO-Gehalt von 4,1 Gew.-% (Theorie 3,81 Gew.-%) bei 60 °C unter Rühren umgesetzt. Es folgte die Zugabe von 24,0 Teile Dimethylolpropionsäure, Komponente E), die weiter bei 60 °C umgesetzt wurde bis zu einem NCO-Wert von 2,1 Gew.-% (Theorie: 1,72 Gew.-%). Anschließend erfolgte die Neutralisation durch Zugabe und Unterrühren von 19,4 Teilen Triethylamin. Die klare Lösung wurde unter Rühren in 900 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 4) mit einem Feststoffgehalt von 38 Gew.-%, einem mittleren Teilchendurchmesser von 84 nm, einem pH-Wert von 8,2 und einer Auslaufzeit von 13 sec erhalten. Die Säurezahl des Polyurethanacrylats betrug 14,0. Reaktionszeit bis zur Neutralisation: 5 h.

### 5) Herstellung einer UV-härtbaren, wässrigen Polyurethan-Dispersion (Vergleich)

339,9 Teile des Polyesteracrylats Laromer® PE 44 F (BASF AG, Ludwigshafen, DE), Komponente A), 10,8 Teile 1 ,4-Butandiol, Komponente C), 30,3 Teile Dimethylolpropionsäure, Komponente E), 199,7 Teile 4,4'-Diisocyanatodicyclohexylmethan, Komponente D), und 0,6 Teile Dibutylzinndilaurat wurden in 185 Teilen Aceton gelöst und bis zu einem NCO-Gehalt von 2,1 Gew.% (Theorie 1,72 Gew.-%) bei 60 °C unter Rühren umgesetzt. Anschließend erfolgte die Neutralisation durch Zugabe und Unterrühren von 19,4 Teilen Triethylamin, und es wurden 115,0 Teile des ethoxylierten Pentaerythrittetraacrylats Miramer® 4004 (Rahn AG, Zürich, CH), Komponente (ii), zugesetzt. Die klare Lösung wurde unter Rühren in 1035 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine UV-härtbare, wässrige Polyurethan-Dispersion 5) mit einem Feststoffgehalt von 39 Gew.-%, einem mittleren Teilchendurchmesser von 97 nm, einem pH-Wert von 8,7 und einer Auslaufzeit von 42 sec erhalten. Die Säurezahl des Polyurethanacrylats betrug 17,5. Reaktionszeit bis zur Neutralisation: 16 h.

### 6) Herstellung einer erfindungsgemäßen, UV-härtbaren, wässrigen Polyurethan-Dispersion

339,9 Teile des Polyesteracrylats Laromer® PE 44 F (BASF AG, Ludwigshafen, DE), Komponente A), 13,2 Teile 1,4-Butandiol, Komponente C), 199,7 Teile 4,4'-Diisocyanato-dicyclohexylmethan, Komponente D), und 0,6 Teile Dibutylzinndilaurat wurden in 185 Teilen Aceton gelöst und bis zu einem NCO-Gehalt von 4,3 Gew.-% (Theorie 4,04 Gew.-%) bei 60 °C unter Rühren umgesetzt. Es folgte die Zugabe von 26,7 Teile Dimethylolpropionsäure, Komponente E), die weiter bei 60 °C umgesetzt wurde bis zu einem NCO-Wert von 2,1 Gew.-% (Theorie: 1,72 Gew.-%). Anschließend erfolgte die Neutralisation durch Zugabe und Unterrühren von 19,4 Teilen Triethylamin, und es wurden 115,0 Teile des ethoxylierten Pentaerythrittetraacrylats Miramer® 4004 (Rahn AG, Zürich, CH), Komponente (ii), zugesetzt. Die klare Lösung wurde unter Rühren in 1035 Teilen Wasser eingetragen. Daraufhin wurde eine Mischung aus 10,8 Teilen Ethylendiamin, Komponente F) und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 6) mit einem Feststoffgehalt von 39 Gew.-%, einem mittleren Teilchendurchmesser von 86 nm, einem pH-Wert von 8,3 und einer Auslaufzeit von 20 sec erhalten. Die Säurezahl des Polyurethanacrylats betrug 15,5. Reaktionszeit bis zur Neutralisation: 5,5 h.

### 7) Herstellung einer UV-härtbaren, wässrigen Polyurethan-Dispersion (Vergleich)

396 Teile des Polyesteracrylats Laromer® PE 44 F (BASF AG, Ludwigshafen, DE), Komponente A), 18,0 Teile 1,4-Butandiol, Komponente C), 199,7 Teile 4,4'-Diisocyanatodicyclohexylmethan, Komponente D), und 0,6 Teile Dibutylzinndilaurat wurden in 180 Teilen Aceton gelöst und bis zu einem NCO-Gehalt von 2,8 Gew.-% (Theorie 2,75 Gew.-%) bei 60 °C unter Rühren umgesetzt. Anschließend wurde das Präpolymer mit 450 Teilen Aceton weiter verdünnt, und es wurden 78 Teile einer 40%igen, wässrigen Lösung PUD-Salz (Michael-Addukt von Acrylsäure und Ethylendiamin, Natriumsalz) untergerührt. Nach Abklingen der Exothermie wurden zur klaren Lösung unter Rühren 900 Teile Wasser eingetragen. Die Dispersion ist extrem hochviskos und kann nicht destilliert wird. Auch über Nacht wird die Dispersion nicht dünnflüssig.

### 8) Herstellung einer UV-härtbaren, wässrigen Polyurethan-Dispersion (Vergleich)

396 Teile des Polyesteracrylats Laromer® PE 44 F (BASF AG, Ludwigshafen, DE), Komponente A), 18,0 Teile 1,4-Butandiol, Komponente C), 199,7 Teile 4,4'-Diisocyanatodicyclohexylmethan, Komponente D), und 0,6 Teile Dibutylzinndilaurat wurden in 180 Teilen Aceton gelöst und bis zu einem NCO-Gehalt von 2,8 Gew.-% (Theorie 2,75 Gew.-%) bei 60 °C unter Rühren umgesetzt. Anschließend wurde das Präpolymer mit 450 Teilen Aceton weiter verdünnt, und es wurden 86 Teile einer 45%igen, wässrigen Lösung AAS-Salz (2-(2-Amino-ethylamino)-ethansulfonsäure-Natriumsalz) untergerührt. Nach Abklingen der Exothermie wurden zur klaren Lösung unter Rühren 900 Teile Wasser eingetragen. Die Dispersion setzt sich sofort komplett ab.

Das erfindungsgemäße Beispiel 2) zeigt, dass bei gleicher Säurezahl, also gleicher Hydrophilierung, die UV-PUD feinteiliger ist als in Vergleichsbeispiel 1). Gemäß der sehr kleinen mittleren Teilchendurchmessern in Beispiel 2) ist die Viskosität recht hoch. In den erfindungsgemäßen Beispielen 3) und 4) wurde im Vergleich zu Beispiel 2) die verzögerte Zugabe der Dimethylolpropionsäure, Komponente E), beibehalten, die Menge an Komponente E) aber zweimal reduziert. Die sich daraus ergebenden UV-PUDs sind weiterhin feinteiliger als in Beispiel 1), die Viskosität sinkt jedoch drastisch mit abnehmender Säurezahl. Das erfindungsgemäße Beispiel 6) zeigt im Vergleich zu Beispiel 5), dass durch die verzögerte Zugabe der Dimethylolpropionsäure und Reduktion der Dimethylolpropionsäure eine feinteiligere und gleichzeitig niedrigviskosere UV-PUD erhalten wird.

Die Beispiele 2), 3), 4) und 6) zeigen im Vergleich zu den Beispielen 1) und 5) eine deutlich verkürzte Reaktionszeit.

Die Beispiele 7) und 8) zeigen, dass die Hydrophilierung mit aminfunktionalisierten Carbonsäuren oder Sulfonsäuren nicht geeignet ist, um erfindungsgemäße UV-PUDs zu hydrophilieren. Auch eine Variation der Menge an Hydrophilierungsagenz führt zu ähnlichen Resultaten. Es zeigt sich die geringe Einsetzbarkeit dieser Hydrophilierungsagenzien für UV-PUDs.

## Patentansprüche

1. Verfahren zur Herstellung strahlenhärtbarer, wässriger Dispersionen auf Basis von Polyurethanacrylaten (i) enthaltend als Aufbaukomponenten
A) eine oder mehrere polymere Verbindungen ausgewählt aus der Gruppe bestehend aus Polyester(meth)acrylaten, Polyether(meth)acrylaten, Polyetherester(meth)acrylaten, ungesättigte Polyester mit Allyletherstruktureinheiten und Polyepoxy(meth)acrylaten mit einer OH-Zahl im Bereich von 15 bis 300 mg KOH/g Substanz,
B) gegebenenfalls eine oder mehrere monomere Verbindungen unterschiedlich von A) mit einer Hydroxyfunktion und mindestens einer (Meth)acrylatgruppe,
C) eine oder mehrere Verbindungen unterschiedlich von A) oder B) mit mindestens einer gegenüber Isocyanat reaktiven Gruppe,
D) eine oder mehrere organische Polyisocyanate,
E) eine oder mehrere Verbindungen mit mindestens einer Hydroxyfunktion und zusätzlich mindestens einer Carbonsäure- oder Carboxylat-Funktion, die für die Polyurethandispersion dispergierend wirken,
F) von A) bis E) verschiedene Verbindungen mit mindestens einer gegenüber Isocyanat reaktiven Gruppe,
**dadurch gekennzeichnet, dass** die Komponenten A) bis D) in einem ersten Reaktionsschritt zu einem Polyurethanacrylat umgesetzt werden, das weder ionische noch potentiell ionische Gruppen enthält und nach Bestimmung des NCO-Gehaltes ein NCO-Wert erreicht wird, der um bis zu 1,5 Gew.-% NCO (absolut) vom theoretischen NCO-Gehalt abweichen kann, und
in einem zweiten Reaktionsschritt die Komponente E) mit noch freien NCO-Gruppen aus dem Reaktionsprodukt der Komponenten A) bis D) umgesetzt wird und nach erneuter Bestimmung des NCO-Gehaltes ein NCO-Wert erreicht wird, der um bis zu 1,5 Gew.-% NCO (absolut) vom theoretischen NCO-Wert abweichen kann, und
in einem dritten Reaktionsschritt die Komponente F) mit noch freien NCO-Gruppen umgesetzt wird.

2. Verfahren zur Herstellung strahlenhärtbarer, wässriger Dispersionen auf Basis von Polyurethanacrylaten (i) gemäß Anspruch 1, **dadurch gekennzeichnet, dass** ein oder mehrere Reaktivverdünner, enthaltend mindestens eine radikalisch polymerisierbare Gruppe, Komponente (ii), beigemischt werden.

3. Verfahren zur Herstellung strahlenhärtbarer, wässriger Dispersionen auf Basis von Polyurethanacrylaten (i) gemäß einem der Ansprüche 1 bis 2, **dadurch gekennzeichnet, dass** Komponente E) ausgewählt ist aus der Gruppe bestehend aus Dimethylolpropionsäure, Dimethylolbuttersäure, Hydroxypivalinsäure, Äpfelsäure, Zitronensäure, Glykolsäure und Milchsäure.

4. Verfahren zur Herstellung strahlenhärtbarer, wässriger Dispersionen auf Basis von Polyurethanacrylaten (i) gemäß einem der Ansprüche 1 bis 3, **dadurch gekennzeichnet, dass** die molaren Verhältnisse von Iscocyanatgruppen in D) zu gegenüber Isocyanaten reaktiven Gruppen in A) bis C) von 1,2 : 1,0 bis 4,0 : 1,0 betragen.

5. Verfahren zur Herstellung strahlenhärtbarer, wässriger Dispersionen auf Basis von Polyurethanacrylaten (i) gemäß einem der Ansprüche 1 bis 4, **dadurch gekennzeichnet, dass** die molaren Verhältnisse von Iscocyanatgruppen in D) zu gegenüber Isocyanaten reaktiven Gruppen in A), B), C) und E) von 1,05 : 1,0 bis 2,5 : 1,0 betragen.

6. Verfahren zur Herstellung strahlenhärtbarer, wässriger Dispersionen auf Basis von Polyurethanacrylaten (i) gemäß einem der Ansprüche 1 bis 5, **dadurch gekennzeichnet, dass** nach dem ersten Reaktionsschritt nach Bestimmung des NCO-Gehaltes ein NCO-Wert erreicht wird, der um bis zu 1,0 Gew.-% NCO (absolut) vom theoretischen NCO-Wert abweichen kann, und nach dem zweiten Reaktionsschritt nach Bestimmung des NCO-Gehaltes ein NCO-Wert erreicht wird, der um bis zu 1,0 Gew.-% NCO (absolut) vom theoretischen NCO-Wert abweichen kann.

7. Strahlenhärtbare, wässrige Dispersionen auf Basis von Polyurethanacrylaten (i), hergestellt nach dem Verfahren gemäß einem der Ansprüche 1 bis 5.

8. Verwendung der strahlenhärtbaren wässrigen Dispersionen auf Basis von Polyurethanacrylaten gemäß Anspruch 6 zur Herstellung von Beschichtungen, Lacken und Klebstoffen.

## Claims

1. Process for preparing radiation-curable, aqueous dispersions based on polyurethane acrylates (i) comprising as synthesis components
A) one or more polymeric compounds selected from the group consisting of polyester (meth)acrylates, polyether (meth)acrylates, polyetherester (meth)acrylates, unsaturated polyesters having allyl ether structural units and polyepoxy (meth)acrylates having an OH number in the range from 15 to 300 mg KOH/g solids,
B) optionally one or more monomeric compounds different from A) and having a hydroxyl function and at least one (meth)acrylate group,
C) one or more compounds different from A) or B) and having at least one isocyanate-reactive group,
D) one or more organic polyisocyanates,
E) one or more compounds having at least one hydroxyl function and additionally at least one carboxylic acid or carboxylate function, which have a dispersing effect on the polyurethane dispersion,
F) compounds different from A) to E) and having at least one isocyanate-reactive group,
**characterized in that** components A) to D) are reacted in a first reaction step to give a polyurethane acrylate which contains neither ionic nor potentially ionic groups, and following determination of the NCO content an NCO value is achieved which may be up to 1.5 wt% NCO (absolute) different from the theoretical NCO content, and
in a second reaction step component E) is reacted with remaining free NCO groups from the reaction product of components A) to D) and, after further determination of the NCO content, an NCO value is reached which may be up to 1.5 wt% NCO (absolute) different from the theoretical NCO value, and
in a third reaction step component F) is reacted with remaining free NCO groups.

2. Process for preparing radiation-curable, aqueous dispersions based on polyurethane acrylates (i) according to Claim 1, **characterized in that** one or more reactive diluents comprising at least one radically polymerizable group, component (ii), are admixed.

3. Process for preparing radiation-curable, aqueous dispersions based on polyurethane acrylates (i) according to either of Claims 1 and 2, **characterized in that** component E) is selected from the group consisting of dimethylolpropionic acid, dimethylolbutyric acid, hydroxypivalic acid, malic acid, citric acid, glycolic acid and lactic acid.

4. Process for preparing radiation-curable, aqueous dispersions based on polyurethane acrylates (i) according to any of Claims 1 to 3, **characterized in that** the molar ratios of isocyanate groups in D) to isocyanate-reactive groups in A) to C) are from 1.2:1.0 to 4.0:1.0.

5. Process for preparing radiation-curable, aqueous dispersions based on polyurethane acrylates (i) according to any of Claims 1 to 4, **characterized in that** the molar ratios of isocyanate groups in D) to isocyanate-reactive groups in A), B), C) and E) are from 1.05:1.0 to 2.5:1.0.

6. Process for preparing radiation-curable, aqueous dispersions based on polyurethane acrylates (i) according to any of Claims 1 to 5, **characterized in that** after the first reaction step, after determination of the NCO content, an NCO value is reached which may be up to 1.0 wt% NCO (absolute) different from the theoretical NCO value, and after the second reaction step, after determination of the NCO content, an NCO value is reached which may be up to 1.0 wt% NCO (absolute) different from the theoretical NCO value.

7. Radiation-curable, aqueous dispersions based on polyurethane acrylates (i) prepared by the process according to any of Claims 1 to 5.

8. Use of the radiation-curable, aqueous dispersions based on polyurethane acrylates according to Claim 6 for producing coatings, paints and adhesives.

## Revendications

1. Procédé pour la préparation de dispersions aqueuses, durcissables par un rayonnement à base de polyuréthane-acrylates (i) contenant comme composants constitutifs
A) un ou plusieurs composés polymères choisis dans le groupe constitué par les polyester(méth)acrylates, les polyéther(méth)acrylates, les polyétherester(méth)acrylates, les polyesters insaturés présentant des unités structurelles de type allyléther et les polyépoxy(méth)acrylates présentant un indice d'OH dans la plage de 15 à 300 mg de KOH/g de substance,
B) le cas échéant un ou plusieurs composés monomères différents de A) présentant une fonction hydroxy et au moins un groupe (méth)acrylate,
C) un ou plusieurs composés différents de A) ou de B) présentant au moins un groupe réactif par rapport à isocyanate,
D) un ou plusieurs polyisocyanates organiques,
E) un ou plusieurs composés présentant au moins une fonction hydroxy et en outre au moins une fonction acide carboxylique ou carboxylate, qui agissent de manière dispersible pour la dispersion de polyuréthane,
F) des composés différents de A) à E) présentant au moins un groupe réactif par rapport à isocyanate,
**caractérisé en ce qu'**on transforme les composants A) à D), dans une première étape de réaction, en un polyuréthane-acrylate, qui ne contient pas de groupes ioniques, ni potentiellement ioniques et on atteint, selon la détermination de la teneur en NCO, une valeur de NCO qui peut s'écarter de jusqu'à 1,5% en poids de NCO (absolu) de la teneur théorique en NCO, et
dans une deuxième étape, on transforme le composant E) avec des groupes NCO encore libres du produit de réaction des composants A) à D) et on atteint, selon une nouvelle détermination de la teneur en NCO, une valeur de NCO qui peut s'écarter de jusqu'à 1,5% en poids de NCO (absolu) de la valeur théorique de NCO, et dans une troisième étape, on transforme le composant F) avec des groupes NCO encore libres.

2. Procédé pour la préparation de dispersions aqueuses, durcissables par un rayonnement à base de polyuréthane-acrylates (i) selon la revendication 1, **caractérisé en ce qu'**on y mélange un ou plusieurs diluants réactifs, contenant au moins un groupe polymérisable par voie radicalaire, comme composant (ii).

3. Procédé pour la préparation de dispersions aqueuses, durcissables par un rayonnement à base de polyuréthane-acrylates (i) selon l'une quelconque des revendications 1 à 2, **caractérisé en ce que** le composant E) est choisi dans le groupe constitué par l'acide diméthylolpropionique, l'acide diméthylolbutyrique, l'acide hydroxypivalique, l'acide malique, l'acide citrique, l'acide glycolique et l'acide lactique.

4. Procédé pour la préparation de dispersions aqueuses, durcissables par un rayonnement à base de polyuréthane-acrylates (i) selon l'une quelconque des revendications 1 à 3, **caractérisé en ce que** les rapports molaires des groupes isocyanate dans D) aux groupes réactifs par rapport à isocyanate dans A) à C) valent 1,2:1,0 à 4,0:1,0.

5. Procédé pour la préparation de dispersions aqueuses, durcissables par un rayonnement à base de polyuréthane-acrylates (i) selon l'une quelconque des revendications 1 à 4, **caractérisé en ce que** les rapports molaires des groupes isocyanate dans D) aux groupes réactifs par rapport à isocyanate dans A), B), C) et E) valent 1,05:1,0 à 2,5:1,0.

6. Procédé pour la préparation de dispersions aqueuses, durcissables par un rayonnement à base de polyuréthane-acrylates (i) selon l'une quelconque des revendications 1 à 5, **caractérisé en ce qu'**après la première étape, selon la détermination de la teneur en NCO, on atteint une valeur de NCO qui peut s'écarter de jusqu'à 1,0% en poids de NCO (absolu) de la valeur théorique de NCO et, après la deuxième étape de réaction, selon la détermination de la teneur en NCO, on atteint une valeur de NCO qui peut s'écarter de jusqu'à 1,0% en poids de NCO (absolu) de la valeur théorique de NCO.

7. Dispersions aqueuses, durcissables par un rayonnement à base de polyuréthane-acrylates (i), préparées selon le procédé selon l'une quelconque des revendications 1 à 5.

8. Utilisation des dispersions aqueuses durcissables par un rayonnement à base de polyuréthane-acrylates selon la revendication 6 pour la préparation de revêtements, de laques et d'adhésifs.
